# EUROPEAN PATENT SPECIFICATION

(11) **EP 2 500 693 B1**
(45) Date of publication and mention of the grant of the patent: **14.06.2017**
(21) Application number: 11400021.9
(22) Date of filing: 16.03.2011
(51) Int. Cl.: G03B 21/20, G03B 21/28

(54) **Redundant back projection display system**
Redundantes Rückprojektionsanzeigesystem
Système de rétroprojection redondant

(43) Date of publication of application: 19.09.2012
(73) Proprietor: AIRBUS HELICOPTERS DEUTSCHLAND GmbH, 86609 Donauwörth (DE)
(72) Inventor: Kreitmair-Steck, Wolfgang, 85521 Ottobrunn (DE); Haisch, Stefan, 85521 Ottobrunn (DE)
(74) Representative: GPI & Associés

(56) References cited:
- FR-A1- 2 860 602
- US-A- 5 902 030
- US-A1- 2007 222 642
- US-B1- 6 497 486

## Description

The invention relates to a redundant back projection display system, particularly for a cockpit of an aircraft, more particularly for a helicopter, with the features of the preamble of claim 1.

Glass cockpits of aircraft or helicopter require a high degree of safety for information displays. Said safety is amongst other provided by redundancy for said information displays.

The document EP 1 491 444 B1 discloses a display system which includes a touch sensitive screen and three projectors, the projectors each being operatively connected by a link to a computer control, which may include one or a plurality of processing units. The projectors project images of various controls onto a back of the touch screen. The display screen is generally transparent, at least over an area where images of controls are to be displayed and thus the images may be viewed from the front of the screen.

The document US 5,582,518 A discloses a system adapted to superimpose images on a screen. A digital computer generates these two images in taking into account the optical relationship of a fish-eye with respect to a spherical screen. For certain applications, the superimposition of these two images makes it possible to present a horizon line that is brighter, shows greater contrast and is precisely positioned.

Modern transport aircrafts employ a "glass cockpit" in which the primary flight displays are electronic rather than mechanical displays. They can provide such displays because their large instrument area provides space for multiple display screens in the cockpit. These screens can be reconfigured electronically to provide critical information even if one screen completely fails.

In contrast, smaller "general aviation" aircraft, and especially single engine piston aircraft, have insufficient room for the redundant displays that make this technology practical and safe. If a single electronic screen that displays several flight-critical instruments were to fail under adverse flight conditions, the aircraft would probably become uncontrollable. Although modern electronics is reliable, it is difficult to guarantee the kind of "uptime" necessary to allow such a screen to be the sole instrument display.

Therefore US 6281810 B1 discloses redundant avionics for flight instruments: a plurality of aircraft flight data sensors, which provide data that are normally displayed on indicators in the cockpit, are transmitted to two independent computers. Each computer is associated with and creates images representative of data sensed by the sensors on a respective projected image display creation device which is in the form of a liquid crystal display. Associated illumination sources and one common or two respective sets of optics project the images from each image creation device on a new screen. The image creation device and the optics would cause the image representative of data from the same sensor to be projected to the same location on the screen regardless of which computer and image creation device provided and projected the image. The computers are independently operable for selectively causing the display of information corresponding to data received from none, some or all of the sensors. For example, the computers are operable so that one display device will display information corresponding to data received from some of the sensors and the other display device will display information corresponding to data received from other sensors and the computers are operable so that each computer may cause display of information based on all of the sensors, as required. Said redundant avionics may comprise one optics assembly after the separate imaging chips. The optics assembly is a mechanical structure, not an electrical apparatus subject to inopportune failure. Therefore, use of a single optics assembly for directing either of the projected images on a screen is an acceptable alternative. The optics assembly may include one mirror, prism or the like to direct the image to the screen and through one lens system.

The document FR 2 860 602 A1 discloses an image projection system with a color optical engine with 3 sources of monochrome primary images and a supplementary image source or standby source capable of compensating for the malfunction of one of three monochrome primary image sources. The supplementary image source simply comprises an imager of the same type as the imagers of the primary image sources and a light source capable of emitting in a selectable spectral band. An optical mixing unit provided in the shape of a cube having three semireflecting edges makes it possible to mix the four images originating from the four image sources.

It is an object of the invention to provide a more efficient redundant back projection display system sufficient to guarantee the required level of redundancy for two displays, particularly for a cockpit of an aircraft, more particularly for a helicopter.

The solution is provided with a redundant back projection display system with the features of claim 1 of the invention. Preferred embodiments of the invention are provided in the subclaims.

According to the invention a redundant back projection display system for an aircraft comprises the features defined in independent claim 1. The display system solves the problem of redundancy for a display without duplication of the display screen and allows intensification of the power of backlighting when necessary because of strong ambient light. With the display system it is possible to mix optically images from two different light sources onto one screen and the required level of redundancy, namely a 1.5 times redundancy, is guaranteed for at least one display screen used for different information at the same time

According to preferred embodiment of the invention a deflector is provided as optical element arranged in series to said at least one splitter, said deflector being fed by any remaining split share from the splitter to pass on the remaining split share from the splitter towards the other of the at least one optical combiner to optically combine said remaining split share with the image/video emitted from the other one of said at least two separate light sources for optical combination towards a second projection screen. With a 50/50 split this preferred inventive display system provides the required level of redundancy, namely a 1.5 time redundancy, for two displays being used preferably for different information at the same time.

According to a further preferred embodiment of the invention at least one of the light sources is a beamer, said beamers being integrated into an instrument panel comprising two projection screens as separate back projection screens.

According to a further preferred embodiment of the invention a separate head motion box is provided for each of said two separate back projection screens allowing some freedom of head movement for the pilots and the ability to view their respective entire back projection screens as long as one of their eyes is inside said respective head motion box.

According to a further preferred embodiment of the invention said two separate head motion boxes are adapted to apply holographic techniques.

The invention and its advantages appear in greater detail from the following description of an embodiment given by way of non-limiting illustration and with reference to the accompanying figures, in which:
- Figure 1 shows schematically a display system in accordance with the invention; and
- Figure 2 shows schematically a further display system in accordance with the invention.

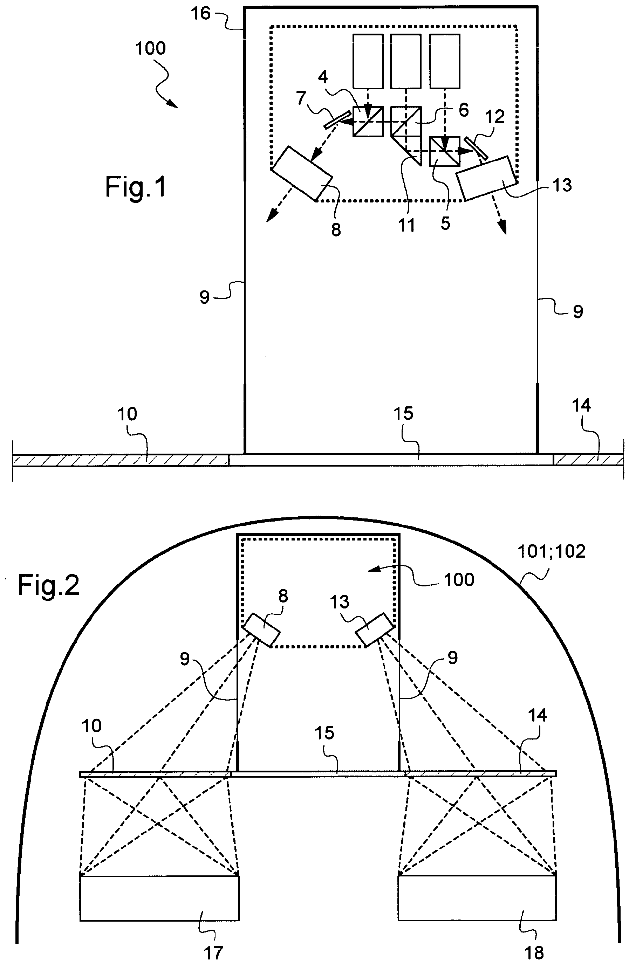

According to Fig. 1 a redundant back projection display system 100 for a helicopter comprises beamers 1, 2, 3 as three separate light sources. The left beamer 1 directs an image/video towards a left optical combiner 4 and the right beamer 3 directs an image/video towards a right optical combiner 5.

An image/video or simply light from the middle beamer 2 is directed towards an optical splitter 6 to be split to two shares of 50% of the image/video or light. One 50% share of the split in the optical splitter 6 is directed towards the left optical combiner 4 to be combined with the image/video from the left beamer 1. The combined respective 1.5 image/video from the left optical combiner 4 is deflected by a left mirror 7 to a left lens system 8 and spread through a transparent coated glass 9 to a left back projection screen 10.

The remaining 50% share of the split in the optical splitter 6 is reflected by a deflector 11 towards the right optical combiner 5 to be combined with the image/video from the right beamer 3. The combined respective 1.5 image/video from the right optical combiner 5 is deflected by a right mirror 12 to a right lens system 13 and spread through the transparent coated glass 9 to a second, right back projection screen 14.

The beamers 1-3, the optical elements 4-6 the mirrors 7, 12 and the lens systems 8, 13 are arranged in a casing 16 with the lateral transparent coated glasses 9. The casing 16 is fixed to the instrument panel 15 with the left back projection screen 10 and the second, right back projection screen 14. The middle beamer 2 may be used as a supplemental light source in case the ambient conditions ask for increased brightness for the back projection screens 10, 14.

According to Fig. 2 corresponding features are referred to with the references of Fig. 1. The cockpit 101 of a helicopter is provided with a forward directed windscreen 102 and the instrument panel 15. The two back projection screens 10, 14 are provided as lateral extensions of the instrument panel 15 with at least a part of these extensions being transparent. For the details of the instrument panel 15 and its lateral extensions reference is made to European Patent Application 10 400 009.6 - 2422, filed on February 18, 2010 by the same applicant. The redundant back projection display system 100 is integrated into a helicopter cockpit 101 such that the lens systems 8, 13 are directed to the transparent back projection screens 10, 14 from the opposite side of the instrument panel 15
relative to positions of a pilot and a co-pilot in the helicopter cockpit 101. Holographic techniques are applied.

Two three-dimensional areas are provided as respective head motion boxes 17, 18 for the pilot and co-pilot allowing some freedom of head movement for said pilots and the ability for each of them to view their respective entire back projection screens 10, 14 as long as one of their eyes is inside said respective head motion box 17, 18.

## Claims

1. A redundant back projection display system (100) for an aircraft comprising
at least two separate light sources (1, 3),
at least two optical combiners (4, 5), each fed with image/video by at least one of the at least two separate light sources (1, 3), and
at least two lens (8, 13), each fed by the at least one optical combiner (4, 5),
**characterized in that** at least two separate projection screens (10, 14), each fed by the at least one lens (8, 13), a third light source (2) and at least one splitter (6) as an optical element are provided, said splitter (6) being fed by the third light source (2) to pass on at least one split share from the third light source (2) towards a first of at least two optical combiners (4) to optically combine said at least one split share with the image/video emitted from the one of said at least two separate light sources (1) for optical combination towards one of the at least two separate projection screens (10) and **in that** a deflector (11) is provided as optical element arranged in series to said at least one splitter (6), said deflector (11) being fed by any remaining split share from the splitter (6) to pass on the remaining split share from the splitter (6) towards a second of the at least two optical combiners (5) to optically combine said remaining split share with the image/video emitted from the other one of said at least two separate light sources (3) for optical combination towards the second projection screen (14).

2. The display system (100) according to claim 1, **characterized in that** said at least one splitter (6) splits 50/50.

3. The display system (100) according to claim 1,
**characterized in that** at least one mirror (7, 12) is provided for each of said optical combiners (4, 5) to deflect the image/video from each of said optical combiners (4, 5) towards its respective at least one lens (8, 13).

4. The display system (100) according to claim 1,
**characterized in that** said separate light sources comprise left, middle and right beamers (1, 2, 3) integrated into an instrument panel (15) and two separate projection screens (10, 14) are back projection screens as part of the instrument panel (15).

5. The display system (100) according to claim 4,
**characterized in that** a separate head motion box (17, 18) is provided for each of said two separate back projection screens (10, 14).

6. The display system (100) according to claim 5,
**characterized in that** two separate head motion boxes (17, 18) are adapted to apply holographic techniques.

7. The display system (100) according to claim 4,
**characterized in that** the middle beamer (2) is adapted to provide increased brightness to the at least one back projection screen (10, 14).

## Patentansprüche

1. Redundantes Rückprojektionsanzeigesystem (100) für ein Luftfahrzeug mit
mindestens zwei getrennten Lichtquellen (1, 3),
mindestens zwei optischen Kombinierern (4, 5), die jeweils mit Bild/Video-Signalen von mindestens einer der mindestens zwei getrennten Lichtquellen (1, 3) gespeist werden, und
mindestens zwei Linsen (8, 13), die jeweils von dem mindestens einen optischen Kombinierer (4, 5) gespeist werden,
**dadurch gekennzeichnet, dass** mindestens zwei getrennte Projektionsschirme (10, 14), die jeweils durch die mindestens eine Linse (8, 13) gespeist werden, eine dritte Lichtquelle (2) und mindestens ein Teiler (6) als ein optisches Element vorgesehen sind, wobei der Teiler (6) von der dritten Lichtquelle (2) gespeist wird, um mindestens einen abgeteilten Anteil von der dritten Lichtquelle (2) zu einem ersten der mindestens zwei optischen Kombinierer (4) weiterzuleiten, um den mindestens einen abgeteilten Anteil mit dem Bild/Video optisch zu kombinieren, das von der einen der mindestens zwei getrennten Lichtquellen (1) zur optischen Kombination zu einem der mindestens zwei getrennten Projektionsschirme (10) gesendet wird, und dadurch, dass ein Umlenker (11) als ein optisches Element vorgesehen ist, der in Reihe zu dem mindestens einen Teiler angeordnet ist, wobei der Umlenker (11) von einem verbleibenden abgeteilten Anteil von dem Teiler (6) gespeist wird, um den verbleibenden abgeteilten Anteil von dem Teiler (6) zu einem zweiten der mindestens zwei optischen Kombinierer (5) weiterzuleiten, um den verbleibenden abgeteilten Anteil mit dem Bild/Video, das von der anderen der mindestens zwei getrennten Lichtquellen (3) zur optischen Kombination zu dem zweiten Projektionsschirm (14) gesendet wird, optisch zu kombinieren.

2. Anzeigesystem (100) nach Anspruch 1,
**dadurch gekennzeichnet, dass** der mindestens eine Teiler (6) in einem Verhältnis von 50/50 teilt.

3. Anzeigesystem (100) nach Anspruch 1,
**dadurch gekennzeichnet, dass** mindestens ein Spiegel (7, 12) für jeden der optischen Kombinierer (4, 5) vorgesehen ist, um das Bild/Video von jedem der optischen Kombinierer (4, 5) zu dessen jeweiliger mindestens einen Linse (8, 13) umzulenken.

4. Anzeigesystem (100) nach Anspruch 1,
**dadurch gekennzeichnet, dass** die getrennten Lichtquellen einen linken, einen mittleren und einen rechten Beamer (1, 2, 3) aufweisen, die in eine Instrumententafel (15) integriert sind, und dass zwei getrennte Projektionsschirme (10, 14) Rückprojektionsschirme als ein Teil der Instrumententafel (15) sind.

5. Anzeigesystem (100) nach Anspruch 4,
**dadurch gekennzeichnet, dass** ein getrenntes Kopfbewegungsfeld (17, 18) für jeden der beiden getrennten Rückprojektionsschirme (10, 14) vorgesehen ist.

6. Anzeigesystem (100) nach Anspruch 5,
**dadurch gekennzeichnet, dass** zwei getrennte Kopfbewegungsfelder (17, 18) zur Anwendung holographischer Techniken ausgebildet sind.

7. Anzeigesystem (100) nach Anspruch 4,
**dadurch gekennzeichnet, dass** der mittlere Beamer (2) so ausgebildet ist, dass er mindestens einem Rückprojektionsschirm (10, 14) eine erhöhte Helligkeit verschafft.

## Revendications

1. Système d'affichage de rétroprojection redondant (100) pour un appareil comprenant :
- au moins deux sources de lumières séparées (1,3),
- au moins deux combinateurs optiques (4,5), chacun alimenté par image/vidéo par au moins une des au moins deux sources de lumières séparées (1,3), et
- au moins deux lentilles (8,13) chacune alimentée par au moins un combinateur optique (4,5),
**caractérisé en ce que** au moins deux écrans de projection séparés (10,14), chacun alimenté par au moins une lentille (8,13), une troisième source de lumière (2) et au moins un séparateur (6) faisant office d'éléments optiques, le dit séparateur (6) étant alimenté par la troisième source de lumière (2) pour distribuer au moins une fraction séparée de la troisième source de lumière (2) en direction d'un premier des au moins deux combinateurs optiques (4) pour combiner optiquement au moins une de la dite fraction séparée avec l'image/vidéo émise par l'une des deux dites sources de lumière séparées (1) pour une combinaison optique en direction d'un des au moins deux écrans de projection séparés (10) et **en ce qu'**un déflecteur (11) fait office d'élément optique disposé en série à au moins un séparateur (6), le dit déflecteur (11) étant alimenté par une quelconque fraction séparée restante du séparateur (6) pour distribuer la fraction séparée restante du séparateur (6) en direction d'un second des au moins deux combinateurs optiques (5) pour combiner optiquement la dite fraction séparée restante avec l'image/vidéo émise de l'autre des au moins deux dites sources de lumières séparées (3) pour la combinaison optique en direction du second écran de projection (14).

2. Le système d'affichage (100) selon la revendication 1, **caractérisé en ce que** le dit séparateur (6) divise 50-50.

3. Le système d'affichage (100) selon la revendication 1, **caractérisé en ce qu'**au moins un miroir (7,12), est prévu pour chacun des dits combinateurs optiques (4,5) pour défléchir l'image/vidéo de chacun des dits combinateurs optiques (4,5) en direction d'au moins une de leurs lentilles respectives.

4. Le système d'affichage (100) selon la revendication 1, **caractérisé en ce que** les dites sources de lumières séparées comprennent des vidéoprojecteurs gauche, centre et droit (1,2,3) intégrés dans un tableau de bord (15) et deux écrans de projection séparés (10,14) qui sont des écrans rétroprojecteurs faisant partie du tableau de bord (15).

5. Le système d'affichage (100) selon la revendication 4, **caractérisé en ce qu'**un volume de déplacement de la tête séparé (17,18) est prévu pour chacun des dits deux écrans de rétroprojection séparés (10,14).

6. Le système d'affichage (100) selon la revendication 5, **caractérisé en ce que** les deux volumes de déplacement de la tête séparés (17,18) sont adaptés pour l'application des techniques holographiques.

7. Le système d'affichage (100) selon revendication 4, **caractérisé en ce que** le vidéoprojecteur central (2) est adapté afin de fournir une luminosité accrue à au moins un écran de rétroprojection (10,14).
